# EUROPEAN PATENT APPLICATION

(11) **EP 1 522 776 A1**
(43) Date of publication of application: **13.04.2005**
(21) Application number: 04425082.7
(22) Date of filing: 10.02.2004
(51) Int. Cl.: F16K 5/06

(54) **Ball plug for valves or taps with the function of washing the seat wherein it is housed**

(30) Priority: 09.10.2003 IT bs20030092
(71) Applicant: Valvosanitaria Bugatti S.p.A., 25045 Castegnato (Brescia) (IT)
(72) Inventor: Trappa, Angelo, 25060 Lodrino (Brescia) (IT)
(74) Representative: Crippa, Paolo Ernesto

(57) **Abstract**

The present invention relates to a ball plug for taps or valves for controlling the flow of a fluid, comprising at least one main passage (15) adapted for placing inlet and outlet ducts in communication, and at least two secondary holes or passages (19, 20) adapted for placing the main passage (15) in fluid communication with the plug seat (13) in the valve body so that part of the inlet fluid is sucked towards the outlet duct passing through said seat.

## Description

The present invention relates to valves or taps for the control of a fluid flow, in particular a liquid and more in particular, water, and it mainly refers to a ball plug for said valves with the function of washing the swat wherein it is inserted.

As known, ball valves comprise a body wherein there are obtained at least one fluid inlet duct and at least one fluid outlet duct, and a ball plug located into a respective seat obtained in the body, between said ducts, and capable of rotating around an axis so as to intercept the fluid flow and adjust its rate. The ball plug is centrally crossed by a passage which, based on the angular position of the plug, can be totally aligned with the fluid inlet and outlet ducts to obtain the maximum rate, partly aligned for smaller rates or not aligned with said ducts to close the valve. For its axial movements, the ball plug is fitted on a control shaft which can be actuated, for example, by a lever.

Between each fluid inlet and outlet duct and the ball plug there is provided at least one annular seal that prevents fluid leaks from the valve when the plug is turned in closed position.

However, when the plug shifts from a position of at least partial opening of the valve to the closed position, a certain amount of fluid remains trapped in the plug passage and thereby in its seat. The trapped fluid becomes stagnant inside the valve body until a further opening of the valve allows it to flow out through the outlet duct.

As required by a recent European directive, if a ball valve is used for controlling the flow of drinking water, water should not become stagnant into the valve body when the valve is not closed, so that the user may receive clean and drinkable water as soon as the valve is opened again.

Object of the present invention is that of proposing a ball valve which should meet the requirements of the European directive mentioned above, that is, which should allow avoiding the stagnation of a fluid, in particular water, into the valve body when the valve is closed.

Such object is achieved by inserting a ball plug into the valve body which, besides being crossed by a main passage adapted for placing the valve inlet and outlet duct into communication, is crossed by at least two secondary passages suitably connecting the main passage with the plug seat.

The flow of the fluid under pressure through the ball plug therefore creates a suction pressure into the seat, so that the fluid contained therein is continuously sucked towards the outlet duct. This suction action of the fluid from the plug seat therefore allows a continuous circulation of the fluid present therein and thereby a continuous wash. Moreover, immediately before the valve is closed, the plug seat is emptied of the fluid, thereby preventing its stagnation into the valve body.

An example of embodiment of the invention is described hereinafter more in detail, with reference to the attached indicative and non-limiting drawings, wherein:
figure 1 shows a perspective see-through view of a ball valve wherein there is inserted and illustrated in partial section a ball plug according to the invention;
figure 2 shows an axial section view of the ball valve of Fig. 1; and
figures 3 and 4 show axial section views of two further different embodiments of the ball valve.

In said drawings, reference numeral 10 denotes the body of a tap or ball valve for controlling the flow of a fluid, for example water, going into said body 10 through an inlet duct 11 and coming out of it through an outlet duct 12. The inlet/outlet indication of said ducts is given with reference to a direction of the fluid flow having a direction indicated in the drawings with arrow F. However, as in the example shown, the two ducts 11 and 12 can also be equal and therefore be used as inlet or outlet without distinction.

A seat 13 is obtained between ducts 11 and 12 wherein there is housed a ball plug 14 capable of rotating around an axis X so as to intercept the fluid flow and adjust its rate. The ball plug is axially crossed by a main passage 15 which, based on the angular position of the plug, can be totally aligned with the fluid inlet and outlet ducts 11, 12 (fully open valve), inclined relative to said ducts (partly open valve) or orientated orthogonally to them (fully closed valve). For its axial movements, the ball plug 14 is fitted on a control shaft 16 which can be actuated by a lever 17.

Moreover, at least two annular seals 18 are provided into body 10, which delimit seat 13 of plug 14 and interact with it to prevent fluid leaks from the valve when the plug is turned in closed position.

According to the invention, moreover, at least two secondary holes or passages 19, 20 are obtained in plug 14, adapted for placing the main passage 15 in fluid communication with seat 13 of the plug.

According to a preferred embodiment of the invention, said secondary holes or passages 19, 20 are inclined relative to the plug rotation axis X. In particular, always considering the direction F of the fluid flowing through the valve, one of the passages (19) converges towards the fluid flow, whereas the other (20) diverges from it. In this way, upon the passage of the fluid flow in the direction F, a suction pressure will generate into the converging hole or passage 19; if the fluid has an opposed direction, the suction pressure will generate in the hole or passage 20.

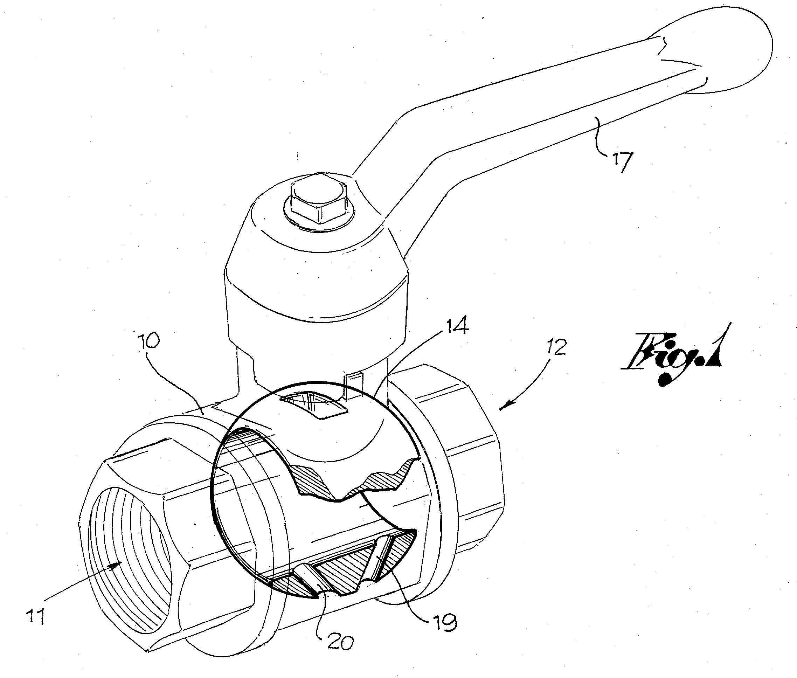

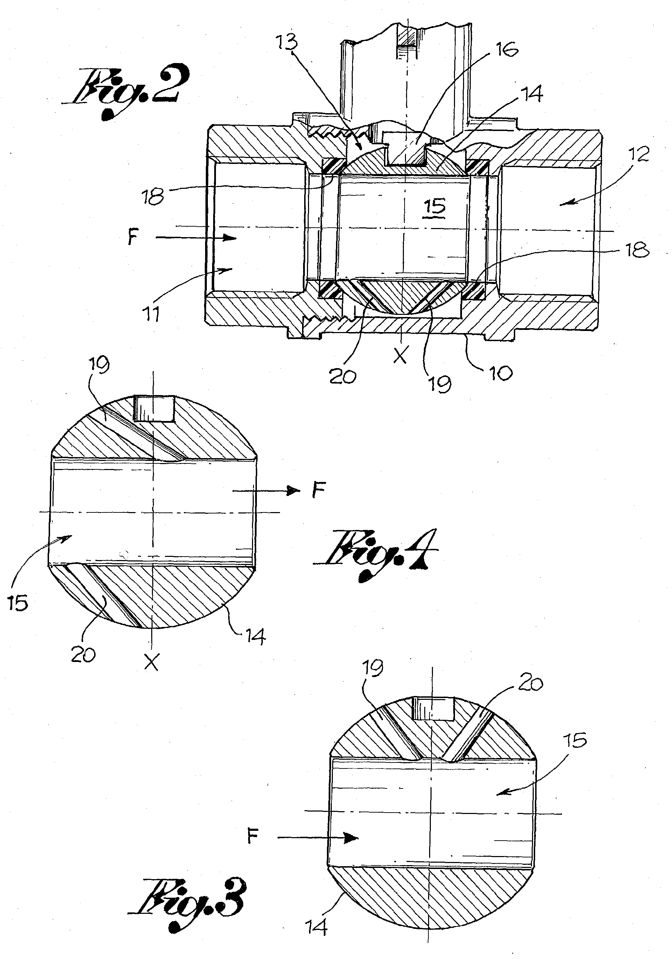

The two secondary holes or passages 19, 20 can be obtained in the same side as plug 14 relative to the main passage 15, as shown in figures 1, 2 and 3, or at sides opposed to it, as shown in figure 4.

Moreover, according to a preferred embodiment of the invention shown in figures 1 and 2, the main passage 15 of the ball plug 14 exhibits a constant fluid flow section, and the secondary passages 19, 20 are substantially obtained so as to connect the ends of the main passage 15 to the central portion of the plug seat 13.

Advantageously, the inclination of the secondary passages 19, 20 relative to the fluid flow direction is selected by 30° hexagesimal.

In any case, the suction pressure generated in a secondary passage 19 or 20 by the passage of the fluid through the ball plug makes a part of the fluid be constantly sucked through the other secondary passage into seat 13, and hence into the main passage 15 again and in the outlet duct 12. Therefore, the fluid can never become stagnant into seat 13, but it is continuously recirculated with the result of keeping the seat itself clean.

Moreover, immediately before the valve is closed, seat 13 is emptied of the fluid, thereby preventing it from becoming stagnant therein up to the next valve opening.

## Claims

1. Ball plug for taps or valves for controlling the flow of a fluid, with possibility of axial rotation inside a seat obtained in the body of said valves or taps, between at least one fluid inlet duct (11) and at least one fluid outlet duct (12), and comprising at least one main passage (15) adapted for placing said inlet and outlet ducts in communication, **characterised in that** it further comprises at least two secondary holes or passages (19, 20) adapted for placing the main passage (15) in fluid communication with the seat (13) in the valve body so that part of the inlet fluid is sucked towards the outlet duct passing through said seat.

2. Ball plug according to claim 1, wherein said secondary holes or passages are inclined relative to the direction of the fluid flow circulating into the main passage.

3. Ball plug according to claim 2, wherein the secondary passages (19, 20) are substantially obtained so as to connect the ends of the main passage (15) to the central portion of the plug seat (13).

4. Ball plug according to any one of the previous claims, wherein said secondary holes or passages are obtained into the plug body at opposed sides relative to the main passage.

5. Ball plug according to any one of claims from 1 to 3, wherein said secondary holes or passages are obtained into the plug body at the same side as the main passage.

6. Ball plug according to any one of the previous claims, wherein considering a direction F for the fluid flow direction, one of the secondary holes or passages is diverging from said direction whereas the other is converging.

7. Ball plug according to any one of claims from 2 to 6, wherein the inclination of the secondary passages (19, 20) relative to the fluid flow direction is of 30° hexagesimal.

8. Ball plug according to any one of the previous claims, wherein the main passage (15) exhibits a constant fluid passage section.

9. Valve or tap for controlling the flow of a fluid comprising a ball plug according to any one of the previous claims for a self-cleaning of the tap or valve body.
